# EUROPEAN PATENT APPLICATION

(11) **EP 2 131 206 A1**
(43) Date of publication of application: **09.12.2009**
(21) Application number: 09161116.0
(22) Date of filing: 26.05.2009
(51) Int. Cl.: G01S 1/00, A63B 71/06

(54) **Method to establish a score database for golf players by means of a global positioning system**

(30) Priority: 04.06.2008 TW 97120690
(71) Applicant: Ko, Wen-Shen, Taipei City 100 (TW)
(72) Inventor: Ko, Wen-Shen, Taipei City 100 (TW)
(74) Representative: Becker Kurig Straus

(57) **Abstract**

A method for a satellite positioning system to establish a golf player score database, which uses a golf GPS (Global Positioning System) device to receive geographic position satellite coordinate signals, and, based on the results of computational processing of which, map and digital information of the terrain, terrain features and related geographic information of the corresponding hole of the corresponding golf course are displayed on the golf GPS device or other display device for reference by the user. Furthermore, the user can input golf stroke scores and related information into the golf GPS device for recording and storage, and transmit the information to a player score database of a remote computer for storage. After carrying out comparative analysis of the player score database according to user instructions, the results are transmitted back and displayed on the golf GPS device or other display device for reference by the user.

## Description

### BACKGROUND OF THE INVENTION

### (a) Field of the Invention

The present invention relates to a method to establish a score database for golf players by means of a global positioning system (GPS), and more particularly to a method whereby golf players use a golf GPS device 10 to collect score data and to transmit the score data to remote computers 20 to establish a player score database. Comparisons and statistical analysis on the score database can be carried out according to the player requests, and the results of the manipulations are displayed on the golf GPS device 10 or other display devices for user reference.

### (b) Description of the Prior Art

Since the development of the global positioning system (GPS) using satellites and open to civil applications by the US government, there has been continuous advancement in related technology and technical products. The application of GPS to different industries of various levels greatly improves the living standard and convenience of daily life. It can even accelerate the notification of emergency and speed up medical rescue to save life.

The global positioning system comprises a plurality of positioning satellites moving in the orbits around the earth, ground control stations and GPS devices. Every positioning satellite consistently maintains the transmission of geographical position signals carrying the orbit coordinates of the satellite. The ground control stations are responsible for monitoring and controlling the operation of the positioning satellites. Moreover, every GPS device of different types on the earth surface can receive geographical position signals transmitted from more than three positioning satellites to calculate the position coordinates of the GPS device, including the longitude, the latitude and the altitude data.

A golf GPS device is a GPS device specially designed for golf players, which also receives geographical position signals and calculates the position coordinates of the golf GPS device (the player). The position coordinates are then compared with the built-in digital course maps in the golf GPS device to locate and display the position of the golf GPS device (the player) on the digital course maps. As a result, the use of the golf GPS devices is able to inform the golf player of the locations of the putting green, bunkers, water pools, trees and obstacles on the fairway and their distances to the golf player.

However, a golf player usually wants to know his or her historical scores (or other players) on a particular golf course, such as personal profiles of players, numbers of shots and locations of balls. It will be more interesting if further comparisons and statistical analysis of the score information of the user and other players can be carried out. The golf GPS devices of the prior art are unable to achieve such functionality. A method to establish a score database for golf players by means of a global positioning system is invented to satisfy such needs and to increase the pleasure of golf playing.

### SUMMARY OF THE INVENTION

In the light of the shortcomings of the aforementioned prior art, the inventor of the present invention, having accumulated knowledge and manufacturing experience of a diverse range of GPS (Global Positioning System) devices, has attentively researched various methods to resolve the shortcomings. Continuous efforts and the following improvements have been culminated in the design of a completely new method for establishing a score database for golf players by means of a global positioning system.

One objective of the present invention is to provide a global positioning system to establish a score database for golf players. The golf GPS device of the present invention is used to collect score data of the user which are transmitted to remote computers to establish a score database. Comparisons and statistical analysis on the score database can be carried out according to the user requests, and the results of the manipulations are displayed on the golf GPS device or other display devices for user reference.

According to the aforementioned objective, the method of the present invention to establish a score database for golf players requires a specially designed GPS device internally pre-installed with a geographical database (digital maps) of golf courses. In addition, the golf GPS device is equipped with a data transmission circuit (a wired or a wireless electric circuit) as well as a score recording and data storage mechanism. Being embedded with the functions described above, the golf GPS device can be used to collect scores and related information of the player. The collected score data of the player are then transmitted to remote computers to establish a score database for golf players.

In practical, the golf GPS device receives geographical position signals from satellites to calculate the position coordinates of the golf GPS device. The position coordinates are compared with the pre-installed geographical database of the golf course, in the format of digital maps, to display the location of the GPS device (the user) on the digital golf course maps. Since the digital golf maps are built subject to the terrains and geographical features of the golf course, the golf player is aware of the locations of the putting green, bunkers, water pools, trees and obstacles on the fairway and their distances to the golf player by reading digital golf maps on the screen of the golf GPS device. Furthermore, the golf player is able to input the golf scores and related information through the score recording and data storage mechanism 12into the golf GPS device. The collected score information is then transmitted to remote computers to establish and accumulate a score database for golf players. Cumulatively, the score database for golf players becomes greater in quantity and size, which contains historical score data of the player in different golf courses as well as score data contributed by many other players via the golf GPS device. Comparisons and statistical analysis on the score database for golf players are carried out according to the user instructions. The results of the manipulations such as the ranking of the player on a specific golf course are displayed on the golf GPS device or other display devices for user reference, thereby achieving the objective of the invention to increase the pleasure of golf playing.

To enable a further understanding of said objectives and the technological methods of the invention herein, a brief description of the drawings is provided below followed by a detailed description of the

### preferred embodiments.

### BRIEF DESCRIPTION OF THE DRAWINGS

FIG. 1 is a schematic view of a method to establish and accumulate a score database for golf players by means of a global positioning system of the present invention.
FIG. 2 is an operational flow chart of the method.

### DETAILED DESCRIPTION OF THE PREFERRED EMBODIMENTS

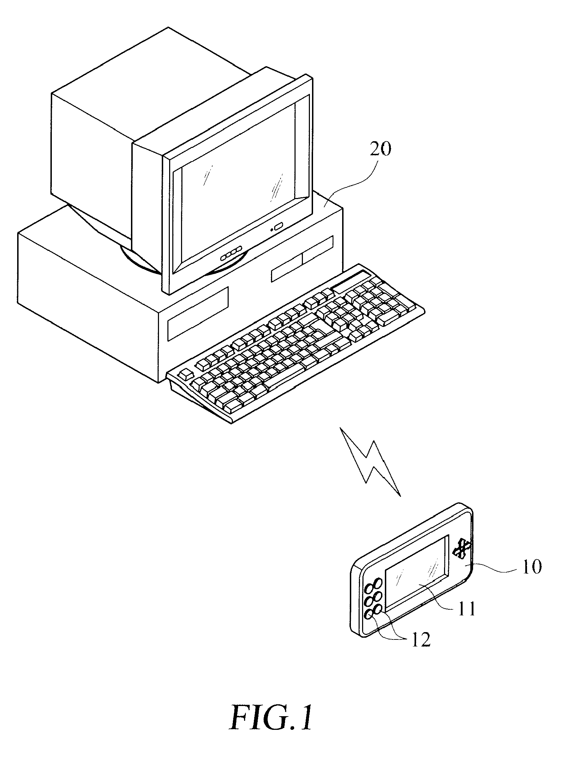

The present invention relates to a method to establish a score database for golf players by means of a global positioning system (GPS). FIG. 1 shows a schematic view of the method. The golf GPS device 10 is equipped with a mutual data transmission circuit (a wired or a wireless electronic circuit) as well as a score recording and data storage mechanism 12. With the equipped facilities, the golf GPS device 10 is internally pre-installed with a geographical database (digital maps) of golf courses from remote computers 20. In addition, the golf GPS device 10 is embedded with functions to collect score data and related information of golf players. The collected and stored score information in the golf GPS device 10 can also be transmitted to remote computers 20 to establish and accumulate a score database for golf players for storage and further processing.

When in use, geographical position signals transmitted from more than three positioning satellites are received by the golf GPS device 10, and the position coordinates including the longitude, the latitude and the altitude data of the golf GPS device 10 (the player) are obtained after calculations. A comparative search on the pre-installed geographical database of golf courses according to the obtained position coordinates is carried out. The digital maps of the corresponding hole with geographical terrains and features related to the obtained coordinates of the golf GPS device 10 are displayed on a screen 11 or other display devices for user reference. Therefore, the player can be informed of the locations of the putting green, bunkers, trees, water pools and other obstacles on the fairway and their distances to the player at once during the game.

As the player proceeding with the game, the golf scores and related information of the player are continuously entered into the golf GPS device 10. The collected score information of the player is finally transmitted to a score database in remote computer 20 for storage and further processing.

Comparisons and statistical analysis on the player score database is carried out according to the user instructions, and the results of the manipulations are displayed on the screen 11 of the golf GPS device 10 or other display devices for user reference. The objective to establish a score database for golf players by means of a global positioning system for further processing is achieved.

In the aforementioned method, the digital maps and geographical database of a golf course describe the terrains and geographical features of the golf course including shape outlines and location coordinates of tee grounds, putting greens, holes, boundaries and obstacles such as water pools, bunkers, trees and long grass areas.

In the aforementioned method, the score database for golf players is a collection of a plurality of historical score data and related information of a plurality of players in a plurality of golf courses.

Referring to FIG. 1, the golf GPS device 10 is equipped with a score recording and data storage mechanism 12 such as input keys, a touch screen, a touch pad, a joystick, a trackball, a pointer, and so on, enabling the user to input environment data (weather, temperature, humidity, wind directions, and so on) and characteristic information (adjustments of tee grounds, boundaries, obstacles, putting greens and holes to update the geographical database) of the golf course, physiology information (height, weight, sex, left or right-handed, and so on), equipment information (types of gloves, balls, golf clubs, golf cart, and so on) as well as golf score data (golf club numbers, locations of shots and balls, numbers of shots, trajectories of balls, and so on) of the player.

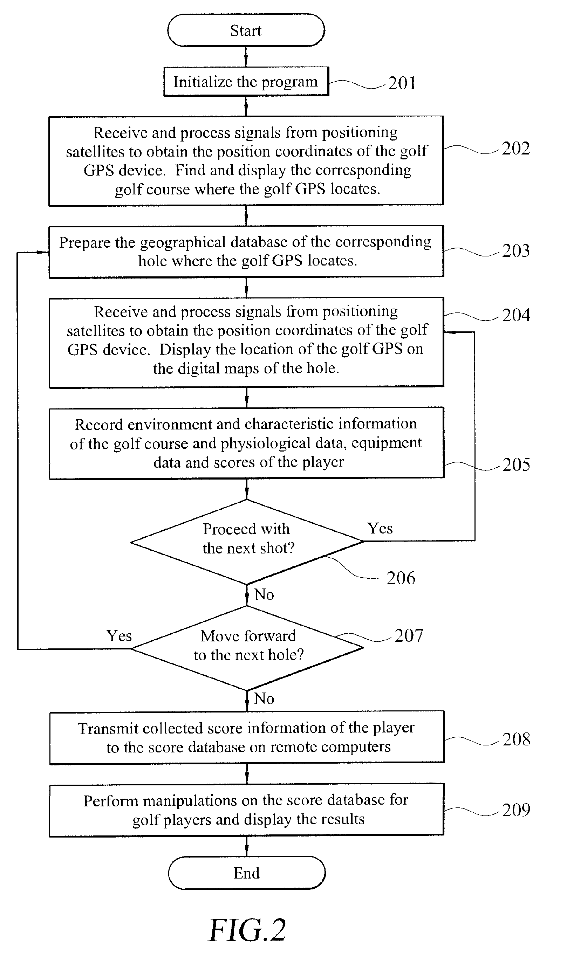

Referring to FIG. 1 and FIG. 2, when the golf GPS device 10 is activated for use, the following processing steps are implemented:
(201) Initialize the program;
(202) Receive geographical position signals transmitted from positioning satellites, and calculate out the coordinates of the golf GPS device 10 (the player). Compare the obtained coordinates with the pre-installed geographical database (digital maps) of golf courses, and prepare the corresponding golf course where the golf GPS device 10 is located;
(203) Receive geographical position signals transmitted from positioning satellites, and calculate out the coordinates of the golf GPS device 10 (the player). Compare the obtained coordinates with the geographical database (digital maps) of the prepared golf course, and display the digital maps of the corresponding hole with geographical terrains and features and boundary outlines on the screen 11 or other display devices;
(204) Receive geographical position signals transmitted from positioning satellites, and calculate out the coordinates of the golf GPS device 10 (the player). Compare the obtained coordinates with the geographical database (digital maps) of the hole, and identify the location of the golf GPS device 10 on the digital map of the hole with the distances from the GPS device to the putting green and obstacles;
(205) Record various types of score data of the player and related information including environment information and characteristic information of the hole, physiological information of the player, equipment used by the player, and location of every shot;
(206) Determine whether or not the player will continue to strike the next shot at the same hole; if yes, go to step (204); otherwise, the player will go to play at the next hole, proceed to step (207);
(207) Determine whether or not the player will play at a new hole; if yes, go to step (203); otherwise, proceed to step (208);
(208) Transmit collected and stored score data of the player and related information to remote computers 20 to establish and accumulate the score database for golf players;
(209) Perform comparisons and statistical analysis on the score database for golf players according to the user instructions, and display the results of the manipulations on the screen 11 of the golf GPS device 10 or other display devices for reference.

In conclusion, the presented method to establish a score database for golf players by means of a global positioning system assuredly provides a practical and practicable function with an innovative str ucture not found in the prior art. Moreover, no similar method has been seen in the market or in any publications that the present invention provides undoubted originality. The present invention clearly complies with the essential elements required for a new patent application. Accordingly, a new patent application is proposed herein.

It is of course to be understood that the embodiments described herein are merely of illustrative of the principles of the invention. A wide variety of modifications thereto may be carried out by persons skilled in the art without departing from the fundamentals and scope of the invention as set forth in the following claims.

## Claims

1. A method to establish a score database for golf players by means of a global positioning system (GPS) comprises a golf GPS device 10 internally pre-installed with a geographical database of golf courses and equipped with a data transmission circuit and a score recording and data storage mechanism, thereby enabling mutual data transmission with remote computers 20 to establish and accumulate a score database for golf players;
when in use, the golf GPS device 10 receives geographical position signals transmitted from positioning satellites and obtains the position coordinates of the golf GPS device 10 after processing signals, therefore comparison of the position coordinates with the pre-installed geographical database of golf courses is carried out, that digital maps and geographical information of a corresponding golf course are displayed on a screen 11 or other display devices for user reference; furthermore, the user is able to input the score data and related information into the golf GPS device 10, and transmit the score information to a score database in remote computers 20 for storage and further processing, after which statistical analysis is performed on the score database for golf players according to the user instructions, the results of the manipulations are displayed on the screen 11 or other display devices for user reference.

2. The method to establish a score database for golf players by means of a global positioning system according to claim 1, wherein the data transmission circuit of the golf GPS device 10 is a wired or a wireless electric circuit.

3. The method to establish a score database for golf players by means of a global positioning system according to claim 1, wherein the score recording and data storage mechanism 12 includes input keys, a touch screen, a touch pad, a joystick, a trackball or a pointer, thereby enabling the user to record player scores and related information, including environment and characteristic information of the golf courses as well as physiological data, equipment data and golf scores of the player.

4. The method to establish a score database for golf players by means of a global positioning system according to claim 3, wherein the environment and characteristic information of the golf courses include weather, temperature, humidity and wind directions as well as adjustments of tee grounds, boundaries, obstacles, putting greens and holes to update the geographical database of the golf courses.

5. The method to establish a score database for golf players by means of a global positioning system according to claim 3, wherein the physiological data of player includes height, weigh, sex and left or right-handed, and the equipment data includes types of gloves, balls, golf clubs and golf cart.

6. The method to establish a score database for golf players by means of a global positioning system according to claim 3, wherein the golf score data of the player comprises golf club numbers, locations of shots and balls, trajectories of balls and numbers of shots.

7. The method to establish a score database for golf players by means of a global positioning system according to claim 1, wherein the geographical database of golf courses shown in the form of digital maps contain shape outlines and position coordinates of tee grounds, putting greens, holes, boundaries and obstacles including water pools, bunkers, trees and long grass areas.

8. The method to establish a score database for golf players by means of a global positioning system according to claim 1, wherein the score database for golf players in remote computers 20 receives and accumulates player scores and related information from the golf GPS device 10, moreover, computational operations are carried out on the score database for golf players according to user instructions, and the results are displayed for user reference thereof.

9. The method for to establish a score database for golf players by means of a global positioning system according to claim 1, wherein the score database for golf players is a collection of a plurality of historical score data and related information of a plurality of players in a plurality of golf courses.
